Europäisches Patentamt

European Patent Office

Office européen des brevets

(11) Numéro de publication : **0 002 171**
**B1**

(12) **FASCICULE DE BREVET EUROPÉEN**

(45) Date de publication du fascicule du brevet :
07.04.82

(51) Int. Cl.³ : **C 10 G 45/00, C 10 G 47/00, C 01 B 3/50**

(21) Numéro de dépôt : 78870008.6

(22) Date de dépôt : 21.11.78

(54) **Procédé pour accroître la pureté de l'hydrogène gazeux recyclé.**

(30) Priorité : 23.11.77 US 854378

(43) Date de publication de la demande :
30.05.79 (Bulletin 79/11)

(45) Mention de la délivrance du brevet :
07.04.82 Bulletin 82/14

(84) Etats contractants désignés :
BE DE FR GB NL SE

(56) Documents cités :
DE - B - 1 043 557
FR - A - 731 539

(73) Titulaire : **COSDEN TECHNOLOGY, INC.**
**118 West, 2nd Street P.O. Box 1311**
**Big Spring Texas 79720 (US)**

(72) Inventeur : **Mayes, Warden W.**
**2906 Stonehaven**
**Big Spring Texas (US)**

(74) Mandataire : **Geukenne, Arthur**
**LABOFINA S.A. 98-100, chaussée de Vilvorde**
**B-1120 Bruxelles (BE)**

EP 0 002 171 B1

Imprimerie Jouve, 18, rue St-Denis, 75001 Paris, France

Procédé pour accroître la pureté de l'hydrogène gazeux recyclé

La présente invention se rapporte à l'hydrotraitement des hydrocarbures. Plus particulièrement, elle se rapporte à une méthode par laquelle on peut hydrotraiter d'une manière plus facile et plus économique une charge d'hydrocarbures tout en maintenant la qualité et la quantité des produits à un degré élevé. La présente invention se rapporte plus spécialement à une méthode de récupération de l'hydrogène gazeux provenant du courant effluent d'un procédé d'hydrotraitement, pour le recycler dans la zone réactionnelle ou pour l'utiliser dans d'autres réactions consommatrices d'hydrogène, cet hydrogène ayant une pureté améliorée vis-à-vis de celui qui peut être obtenu dans les procédés conventionnels.

Il est bien connu dans l'état de la technique antérieure que les produits de qualité ayant la gamme d'ébullition des essences, comme les hydrocarbures aromatiques, par exemple le benzène, le toluène et le xylène, peuvent être produits par réformage catalytique de charges contenant des naphtas, en utilisant un catalyseur contenant du platine, en présence d'hydrogène, de façon à transformer au moins une partie de la charge en hydrocarbures aromatiques. L'une des réactions prédominantes dans le réformage catalytique consiste en une déshydrogénation des hydrocarbures naphténiques. Cette réaction de déshydrogénation produit un grand excès d'hydrogène qui est alors disponible pour d'autres usages, comme dans les réactions d'hydrodésulfuration et analogues. Cependant, une partie considérable de l'hydrogène produit est recyclé de façon à maintenir une pression partielle d'hydrogène appropriée sur le catalyseur dans la zone de réformage catalytique.

Cependant, dans un réformage catalytique, on trouve également une réaction d'hydrocraquage qui transforme les hydrocarbures en hydrocarbures de poids moléculaire relativement plus bas, par exemple en hydrocarbures normalement gazeux tels que le méthane, l'éthane, le propane, le butane, etc., et en particulier en hydrocarbures $C_2+$ qui deviennent alors des contaminants du courant gazeux d'hydrogène qui est séparé du courant effluent de la zone réactionnelle. Ces contaminants ont pour effet de réduire la pureté de l'hydrogène à un point tel que des techniques de purification extérieures doivent fréquemment être utilisées avant de pouvoir réutiliser l'hydrogène provenant du réformeur, dans d'autres réactions chimiques requérant un hydrogène de pureté relativement élevée. Un hydrogène de pureté réduite a également un autre effet significatif sur la réaction de réformage, en ce sens qu'il faut en utiliser des quantités considérables de façon à maintenir la pression partielle d'hydrogène dans la zone réactionnelle à son niveau approprié, comme déjà exposé précédemment.

Il est d'ailleurs bien connu que la réaction de réformage doit avoir une atmosphère d'hydrogène, pour que se réalisent les diverses réactions désirées, ce qui signifie que le courant gazeux d'hydrogène que l'on sépare, comme décrit ci-avant, doit être pour une majeure partie recyclé à la zone de réformage catalytique.

A cause de la forte perte de charge à travers un système conventionnel de réformage catalytique, qui comprend généralement plusieurs réacteurs catalytiques et séparateurs, le gaz séparé pour le recyclage doit être comprimé à une pression au moins égale à celle de la zone réactionnelle, avant d'y être recyclé et réutilisé de façon convenable. De plus, il est bien connu que la compression du courant gazeux d'hydrogène dans les unités de réformage catalytique pour la production de produits à gamme d'ébullition des essences, comme le benzène, le toluène et le xylène, est un facteur coûteux aussi bien du point de vue construction que du point de vue opérationnel. En d'autres termes, la forte puissance requise pour le compresseur de recyclage demande un investissement conséquent en capital et occasionne un coût opératoire élevé, quelle que soit l'unité de réformage catalytique.

De plus, à cause de la réglementation sur l'environnement, on a remarqué une évolution dans la technologie du réformage catalytique vers des procédés de réformage catalytique opérant sous des conditions sévères. Avec des conditions sévères de réformage, le problème présenté par la pureté de l'hydrogène a encore plus d'importance du fait de l'accroissement de l'hydrocraquage qui accompagne le réformage effectué dans des conditions sévères.

Cet accroissement de l'activité de la réaction d'hydrocraquage se marque dans une augmentation significative de la concentration en hydrocarbures de bas poids moléculaire. Ces concentrations élevées en hydrocarbures de bas poids moléculaire réduisent la pureté de l'hydrogène de recyclage et, en conséquence, conduisent à augmenter la quantité de gaz à recycler pour maintenir la pression partielle d'hydrogène au niveau désiré dans la zone réactionnelle. En conséquence, on doit comprimer une quantité plus grande de gaz à recycler.

On se rend compte dès lors, que dans des opérations de réformage sous des conditions sévères, le problème de la pureté réduite de l'hydrogène est encore plus accru.

En conséquence, il serait intéressant de mettre au point une méthode d'hydrotraitement des charges d'hydrocarbures par laquelle on produirait un hydrogène de pureté relativement élevée, non seulement pour être utilisé dans les opérations de recyclage, mais également dans d'autres réactions que la réaction d'hydrotraitement.

Jusqu'à présent, on a effectué plusieurs essais pour développer une méthode de purification de l'hydrogène produit et présent dans le courant effluent d'un procédé d'hydrotraitement. L'une de ces méthodes consiste à enlever du courant effluent d'un procédé d'hydrotraitement, un courant gazeux contenant de l'hydrogène relativement impur, à comprimer ce courant gazeux, à le mélanger avec un courant d'hydrocarbures liquides, pour absorber certains hydrocarbures gazeux, et à enlever de ce courant gazeux, dans une seconde séparation un courant gazeux enrichi en hydrogène. Par exemple, dans le US-A-3.431.195, on sépare un courant effluent d'une zone catalytique dans un séparateur gaz-liquide à basse pression, en un courant gazeux contenant de l'hydrogène impur et en un courant d'hydrocarbures normalement liquides. On comprime ensuite le courant gazeux contenant de l'hydrogène et on le mélange avec le courant d'hydrocarbures liquides provenant du séparateur basse pression, de façon à enlever de ce courant gazeux certains hydrocarbures gazeux. On soumet ensuite ce mélange à une séparation à haute pression pour produire un gaz enrichi en hydrogène, celui-ci étant recyclé à la zone de réformage catalytique. De même, dans le US-A-3.706.655, on sépare dans un séparateur basse pression un courant gazeux contenant de l'hydrogène impur d'un courant effluent d'une zone de réformage, on le comprime et on le mélange avec la charge d'hydrocarbures du réformeur et on le soumet ensuite à une séparation à pression élevée pour produire un courant gazeux ayant une teneur plus élevée en hydrogène.

Le procédé décrit dans le US-A-3.520.799 est une variante des procédés décrits ci-dessus, et consiste en un procédé de purification de l'hydrogène dans lequel on fait passer une partie du courant gazeux contenant de l'hydrogène, et récupéré dans le séparateur haute pression, dans une colonne d'absorption dans laquelle le courant gazeux est mis en contact à contre-courant avec des hydrocarbures $C_6+$ provenant du pied de la colonne de stabilisation du système de réformage, ce qui permet d'enlever certains hydrocarbures gazeux présents dans le courant gazeux contenant de l'hydrogène. Le courant d'hydrogène de pureté plus élevée résultant de cette opération est refroidi et soumis à une nouvelle séparation gaz-liquide, pour produire de l'hydrogène pouvant être utilisé dans d'autres unités de raffinage. Cependant, bien que cette méthode permette d'obtenir un hydrogène de pureté accrue, l'hydrogène recyclé à la zone de réformage catalytique n'est pas soumis à ces étapes de purification supplémentaire. Par conséquent, le courant gazeux contenant de l'hydrogène, recyclé à la zone de réformage catalytique, contient des quantités importantes d'hydrocarbures gazeux, ce qui accroît les frais opératoires et particulièrement pour les opérations de réformage sous des conditions sévères. De plus, de façon à obtenir de l'hydrogène de pureté améliorée, la méthode décrite dans le US-A-3.520.799 exige que le courant effluent de la zone de réformage catalytique soit soumis à une série complexe d'étapes de purification exigeant trois séparations gaz-liquide, une absorption gaz-liquide, et un fractionnement, ce qui nécessite un investissement important pour l'équipement.

Selon une autre variante de la méthode de purification de l'hydrogène produit, décrite dans les US-A-3.431.195 et 3.706.655, on décrit dans le US-A-3822.014 une méthode d'enrichissement de l'hydrogène dans laquelle au lieu d'une séparation gaz-liquide à haute pression, le courant gazeux contenant l'hydrogène relativement impur récupéré au séparateur gaz-liquide basse pression est mis en contact à contre-courant dans une colonne de condensation avec un courant descendant d'un liquide refroidi provenant du pied de la zone de fractionnement. Ce contact produit une condensation partielle et une absorption sélective du courant gazeux ascendant, avec un enrichissement simultané de l'hydrogène. Cependant, bien que la substitution de la séparation gaz-liquide à haute pression par une étape de condensation par contact, produise un hydrogène recyclé de pureté plus élevée, cette méthode n'a pas un effet suffisant pour réduire la concentration en hydrocarbures à bas poids moléculaires dans le courant gazeux contenant de l'hydrogène, pour permettre de l'utiliser d'une façon satisfaisante dans les opérations de réformage sous des conditions sévères.

Comme les opérations de réformage se pratiquent sous des conditions de plus en plus sévères, les procédés cités ci-dessus deviennent de moins en moins intéressants, vu leur complexité et/ou la pureté réduite de l'hydrogène obtenu pour le recyclage. En conséquence, il était absolument nécessaire de trouver une méthode pour hydrotraiter des charges d'hydrocarbures par laquelle l'hydrogène peut être économiquement et facilement purifié, et qui permette d'obtenir une réduction significative de la concentration en hydrocarbures à bas poids moléculaires présents dans le courant gazeux d'hydrogène recyclé.

La présente invention a pour but d'atteindre cet objectif et a notamment pour objet une méthode d'hydrotraitement des charges d'hydrocarbures et notamment une méthode de réformage catalytique pour produire des hydrocarbures à bas poids moléculaire, de l'hydrogène de pureté élevée et des hydrocarbures normalement liquides.

L'invention a pour objet particulier une méthode de récupération d'hydrogène de pureté accrue provenant du courant effluent d'un procédé d'hydrotraitement, notamment de réformage catalytique.

La présente invention a encore pour objet une méthode de purification de l'hydrogène produit pour l'utiliser dans une opération de réformage catalytique sous des conditions sévères.

La méthode de la présente invention est caractérisée en ce qu'elle comprend la mise en contact d'une charge d'hydrocarbures avec un catalyseur d'hydrotraitement, en présence d'hydrogène, sous des conditions suffisantes pour produire un courant effluent contenant de l'hydrogène en mélange avec des hydrocarbures transformés; la séparation du courant effluent résultant en un courant gazeux contenant de l'hydrogène et un courant d'hydrocarbures en phase liquide ; la compression du courant gazeux, la mise en contact du courant gazeux comprimé avec un premier liquide absorbant comprenant au moins une partie du courant d'hydrocarbures liquides récupérés à l'étape de séparation gaz-liquide, et avec un second liquide absorbant spécifié ci-dessous, sous des conditions suffisantes pour produire un premier courant de l'hydrogène relativement pur et un courant d'hydrocarbures liquides riche en hydrocarbures absorbés ; le passage du courant riche en hydrocarbures liquides dans un stabilisateur sous des conditions suffisantes pour enlever un courant de tête d'hydrocarbures gazeux et pour produire un second courant d'hydrocarbures transformés stabilisés ; le recyclage d'au moins une partie du courant d'hydrocarbures transformés et stabilisés à l'étape d'absorption comme second liquide absorbant ; et le recyclage d'au moins une partie de l'hydrogène à l'étape de transformation des hydrocarbures. Selon un autre mode d'exécution, on effectue le refroidissement du courant de tête d'hydrocarbures légers, et la séparation du courant refroidi en un courant de gaz stabilisant relativement pur et en un courant de liquide stabilisant.

D'une manière générale, la Demanderesse a trouvé que les coûts opératoires des procédés d'hydrotraitement et en particulier des procédés de réformage catalytique sous des conditions sévères, peuvent être réduits de façon significative, en minimisant la concentration en hydrocarbures à bas poids moléculaire dans l'hydrogène de recyclage. La caractéristique de la présente invention réside donc dans une méthode facile et économique pour purifier l'hydrogène produit pour le recyclage et les autres usages, qui consiste à comprimer l'hydrogène produit et ensuite à le mettre en contact dans une première étape d'absorption avec un premier liquide absorbant comprenant au moins une partie des hydrocarbures en phase liquide obtenus lors de la séparation gaz-liquide du courant effluent du procédé d'hydrotraitement, et dans une seconde étape d'absorption, avec un second liquide absorbant comprenant une partie stabilisée des hydrocarbures en phase liquide, ces absorptions s'effectuant sous des conditions suffisantes pour produire un courant d'hydrogène relativement pur. Par comparaison avec les procédés antérieurs décrits ci-dessus, la Demanderesse prévoit l'absorption par solvant de l'hydrogène relativement impur qui est produit au moyen de deux solvants à base d'hydrocarbures liquides différents, ce qui conduit à une augmentation significative de la pureté de l'hydrogène.

Selon un autre mode d'exécution de la présente invention, la Demanderesse prévoit également un appareil pour la récupération de l'hydrogène de pureté élevée provenant du courant effluent du procédé d'hydrotraitement, pour l'utiliser dans le procédé d'hydrotraitement de la présente invention. Cet appareil comprend un séparateur gaz-liquide pour séparer ledit courant en un courant contenant de l'hydrogène et en un courant contenant les hydrocarbures liquides ; un dispositif pour amener le courant effluent au séparateur ; un dispositif pour comprimer le courant gazeux contenant de l'hydrogène ; un dispositif de purification du courant gazeux contenant de l'hydrogène par mise en contact à contre-courant avec deux liquides absorbants ; un dispositif pour amener le courant gazeux au dispositif de purification ; un dispositif pour amener au moins une partie du courant d'hydrocarbures liquides du séparateur au dispositif de purification, comme premier liquide absorbant ; et un dispositif pour amener au moins une partie des hydrocarbures liquides stabilisés du procédé d'hydrotraitement au dispositif de purification comme second liquide absorbant. De préférence, le dispositif de purification comprend une colonne d'absorption ayant une entrée pour le courant gazeux d'hydrogène impur à sa partie inférieure, et des entrées pour chacun des liquides absorbants à sa partie supérieure. Le dispositif de purification peut comprendre deux colonnes d'absorption, une première colonne d'absorption établissant une absorption à contre-courant du courant gazeux d'hydrogène impur avec le premier liquide absorbant, et une seconde colonne d'absorption établissant une absorption à contre-courant du courant gazeux d'hydrogène enrichi provenant de la première colonne d'absorption avec le second liquide absorbant.

L'utilisation du procédé et de l'appareil de l'invention permet d'hydrotraiter des charges d'hydrocarbures et particulièrement de les réformer catalytiquement d'une manière facile et économique avec une réduction significative des frais opératoires et des investissements. De plus, en soumettant l'hydrogène impur produit à une étape d'absorption avec deux solvants d'hydrocarbures liquides différents, on obtient de l'hydrogène qui contient un minimum d'hydrocarbures normalement gazeux. La présente invention procure également une méthode et un appareil particulièrement efficaces pour hydrotraiter les charges d'hydrocarbures et en particulier pour purifier l'hydrogène produit dans de tels procédés.

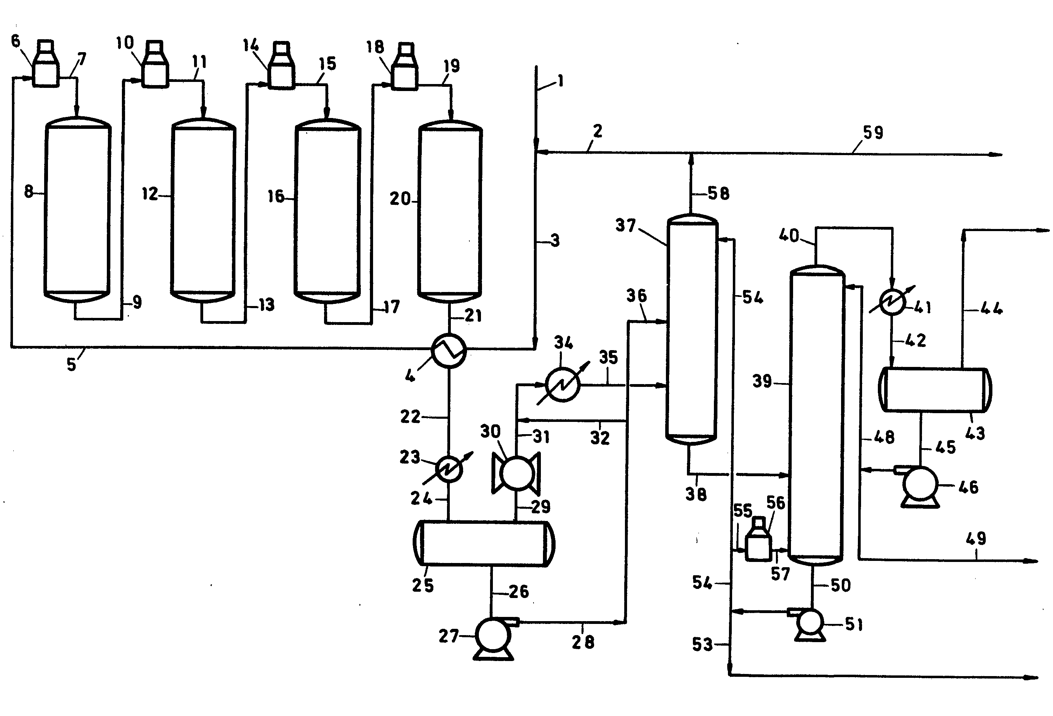

Les autres objets, caractéristiques et avantages de la présente invention apparaîtront clairement à l'homme de métier après examen de la description détaillée de la présente invention donnée avec référence à la figure qui l'accompagne.

Cette figure représente un schéma de fonctionnement d'un mode d'exécution du procédé d'hydrotraitement et de l'appareil suivant l'invention appliqués à une opération de réformage catalytique.

La méthode de la présente invention est applicable à tout procédé de conversion d'hydrocarbures dans lequel une charge d'hydrocarbures et de l'hydrogène sont mis en contact dans une zone de réaction catalytique.

A titre d'illustration, mais sans limitation aucune, des procédés auxquels on peut appliquer la méthode de l'invention comprennent le réformage catalytique, l'isomérisation, l'hydroraffinage, l'hydrocraquage, l'hydrodésalkylation, la déshydrogénation et d'autres réactions encore qui sont bien connues de l'homme de métier. La présente invention est particulièrement appropriée, pour un procédé de réformage catalytique et est particulièrement avantageuse pour un procédé de réformage catalytique se déroulant sous des conditions sévères.

L'état de la technique relatif à l'hydrotraitement des hydrocarbures est bien connu de l'homme de métier et les conditions particulières de réaction qui sont requises pour chaque réaction d'hydrotraitement sont également bien connues. Les charges d'hydrocarbures et les compositions de catalyseurs utilisées dans ces réactions d'hydrotraitement sont également bien connues de l'homme de métier et sont appropriées pour être utilisées dans le procédé d'hydrotraitement décrit dans la présente invention.

A titre d'illustration, le procédé de la présente invention sera décrit en se référant à un procédé de réformage catalytique, puisque le concept inventif de la présente invention y est particulièrement approprié. Cependant, il doit être bien compris que la présente invention fournit une méthode générale pour la séparation d'un courant effluent provenant de n'importe quel type de réaction d'hydrotraitement qui produise en mélange avec l'hydrogène des types de composés auxquels on se réfère et qui sont appelés « hydrocarbures normalement gazeux » et « hydrocarbures normalement liquides ».

Comme charges pouvant être utilisées dans une opération de réformage catalytique pour produire un produit à gamme d'ébullition des essences, tels que les réformats contenant des hydrocarbures aromatiques, on peut notamment citer les charges d'hydrocarbures qui contiennent à la fois des naphtènes et des paraffines en concentrations relativement élevées. De telles charges d'hydrocarbures comprennent notamment les fractions à gamme d'ébullition étroite telles que les fractions de naphtas, aussi bien que les produits pratiquement purs tels que le cyclohexane, le méthylcyclohexane, le méthylcyclopentane et leurs mélanges. La classe préférée de charges appropriées pour les opérations de réformage catalytique inclut ce que l'on appelle communément les « essences de distillation directe », telles que les fractions légères et lourdes de naphta, avec une fraction de naphta relativement exempte d'hydrocarbures normalement gazeux, bouillant entre environ 30° et 238 °C.

L'opération de réformage est aussi préférentiellement une opération catalytique et elle peut être réalisée en présence de tout catalyseur approprié qui soit efficace pour transformer les composés non aromatiques contenus dans la fraction de charge à réformer, en hydrocarbures aromatiques correspondants. Le catalyseur de réformage peut être choisi parmi ceux bien connus dans l'état de la technique. Plus particulièrement, ces catalyseurs comprennent au moins un métal du groupe du platine et un support réfractaire inorganique. De plus, le catalyseur peut également contenir un promoteur qui est choisi parmi d'autres composés métalliques comme le rhénium, afin d'assurer la stabilité du catalyseur de réformage. Le catalyseur de réformage peut également contenir comme promoteur un composé halogéné afin d'en augmenter l'acidité. A titre d'illustration, mais sans limitation aucune, on peut citer comme exemple de catalyseur de réformage approprié pour être utilisé dans la présente invention, les catalyseurs platine-germanium-halogène sur alumine, platine-halogène sur alumine, platine-halogène-rhénium sur alumine, platine-halogène-iridium sur alumine, et des combinaisons de ceux-ci.

Les conditions opératoires typiques d'une opération de réformage catalytique comprennent la présence d'un des catalyseurs cités ci-dessus, et des températures comprises entre environ 425 °C et environ 600 °C, de préférence entre environ 425 °C et environ 535 °C, des pressions absolues comprises entre environ 3,5 kg/cm$^2$ et environ 70 kg/cm$^2$ et de préférence entre environ 7 kg/cm$^2$ et 14 kg/cm$^2$. On maintient également dans la zone de réformage une vitesse spatiale horaire de liquide de 0,1 à 20 ou plus et de préférence de 0,5 à 3 litres de charge de naphta par litre de catalyseur et par heure, un taux de recyclage d'hydrogène compris entre 1 et 20 moles d'hydrogène par mole de charge de naphta et de préférence compris entre 5 et 7 moles d'hydrogène par mole de charge de naphta. Lorsque l'on désire une opération de réformage sous des conditions sévères, les conditions de réformage comprennent des températures comprises entre 480 et 600 °C et de préférence comprises entre 480 et 565 °C.

On peut réaliser la réaction de réformage catalytique dans tout type de système de réformage bien connu de l'homme de métier. Par exemple, le système de réformage peut être un système cyclique, semi-cyclique ou à lit mobile, et peut contenir un ou plusieurs lits de catalyseur. Le système de réformage peut aussi bien être isothermique qu'adiabatique.

Généralement, le système de réformage comprend plusieurs lits de catalyseur utilisés soit de façon étagée dans un seul réacteur tubulaire, soit préférentiellement dans une série de réacteurs séparés. Selon un mode d'exécution préféré de la méthode d'hydrotraitement de la présente invention, le système de réformage comprend généralement au moins trois zones de réaction adiabatique et de préférence quatre. Les réacteurs de réformage particuliers qui sont utilisés peuvent être de n'importe quelle construction appropriée et peuvent être tels que ceux trouvés dans une raffinerie.

La quantité exacte de catalyseur à utiliser dans chaque lit de catalyseur peut être de volume égal ou variable, en fonction du catalyseur, de la charge et de la destination particulière pour laquelle on réalise la réaction de conversion d'hydrocarbures.

Dans une opération de réformage catalytique, lorsque l'on utilise quatre réacteurs séparés, le catalyseur peut être réparti de la façon suivante dans chaque réacteur : 10 %, 15 %, 25 % et 50 % en poids respectivement. D'autres variations, comme par exemple la géométrie du réacteur et le volume de catalyseur, qui apparaîtraient évidentes à l'homme de métier sont également appropriées pour être utilisées dans la présente invention.

La figure qui accompagne la description détaillée de la présente invention est un schéma de fonctionnement de la méthode d'hydrotraitement de la présente invention, appliquée à une opération de réformage catalytique. On doit également considérer que, bien que la méthode d'hydrotraitement de la présente invention soit particulièrement appropriée pour une opération de réformage catalytique, elle est également appropriée pour tout procédé de transformation d'hydrocarbures dans lequel une charge d'hydrocarbures est mise en contact avec de l'hydrogène dans une zone de réaction catalytique.

Selon le mode d'exécution décrit dans la figure, le système de réformage comprend quatre réacteurs catalytiques (8), (12), (16) et (20). On introduit une charge appropriée d'hydrocarbures, telle qu'une fraction de naphta, de préférence une fraction de naphta $C_6$-205 °C, par la conduite (1) et on la mélange avec le courant d'hydrogène de recyclage amené par la conduite (2). Après mélange avec le courant d'hydrogène de recyclage, le mélange charge-hydrogène est conduit via la conduite (3), l'échangeur de chaleur (4) et la conduite (5), à un système de chauffage (6) et ensuite via la conduite (7) au réacteur de réformage (8) dans lequel le mélange est réformé dans des conditions appropriées pour la transformation des composés paraffiniques et naphténiques de la charge en hydrocarbures aromatiques. Le courant de charge partiellement transformée est ensuite soutiré à travers la conduite (9), passe à travers le dispositif de chauffage (10) et est introduit dans le réacteur (12) via la conduite (11) dans lequel elle est soumise à un nouveau réformage. Le nouveau mélange d'hydrogène de recyclage et de réactifs transformés est ensuite enlevé par la conduite (13), le dispositif de chauffage (14) et envoyé au réacteur de réformage (16) via la conduite (15). Après une nouvelle réaction, le mélange d'hydrogène de recyclage et de réactifs transformés est enlevé par la conduite (17), traverse le dispositif de chauffage (18) et est envoyé par la conduite (19) au réacteur de réformage (20) dans lequel on termine la réaction de réformage. On soutire un produit de la zone de réaction ou courant effluent par la conduite (21), ce courant effluent est soumis à un échange thermique avec la charge à réformer dans l'échangeur de chaleur (4). Le courant effluent partiellement refroidi est ensuite envoyé via la conduite (22) au refroidisseur (23) et il est amené via la conduite (24) au séparateur (25).

Le séparateur (25) est essentiellement un récipient capable de séparer relativement rapidement les vapeurs du liquide. Ce récipient, peut être de tout type bien connu de l'homme de métier, et possède généralement une conduite d'entrée pour le courant effluent de la zone réactionnelle, située entre une conduite supérieure pour la sortie des vapeurs et une conduite inférieure pour le soutirage du liquide. Dans certains cas, ce récipient peut contenir des moyens de chauffage et/ou de refroidissement internes, dépendant du type de matières chargées et du degré de séparation désiré.

Généralement, le séparateur (25) est également un séparateur à pression relativement faible, et il est maintenu à une pression pratiquement égale à celle de la zone de réaction de réformage de laquelle émane le courant effluent. Généralement, dans une opération de réformage typique, le séparateur (25) est maintenu à une pression absolue comprise entre environ 3,5 kg/cm² et environ 35 kg/cm².

Le séparateur (25) effectue une séparation préliminaire du courant effluent en un courant gazeux, contenant de l'hydrogène en mélange avec des hydrocarbures normalement gazeux, qui, récupéré par la conduite (29), et en un courant d'hydrocarbures normalement liquides, qui est soutiré par la conduite (26). Le courant gazeux contenant de l'hydrogène, récupéré au séparateur (25), est comprimé dans un compresseur (30) à une pression d'au moins 3,5 kg/cm² plus élevée que celle régnant dans le séparateur (25), le courant gazeux est ensuite récupéré par la conduite (31). Le courant gazeux comprimé est ensuite refroidi à une température d'environ 35 °C, dans un échangeur de chaleur (34) afin d'enlever la chaleur due à la compression du courant gazeux passant dans la conduite (29). Le courant gazeux comprimé et refroidi est ensuite soumis à une série de traitements par lesquels on enlève les hydrocarbures normalement gazeux et on produit l'hydrogène relativement pur.

La Demanderesse a trouvé que l'on peut produire de l'hydrogène avec une pureté non encore obtenue jusqu'à présent, d'une manière simple et économique, en soumettant le courant gazeux comprimé et refroidi contenant de l'hydrogène impur, à deux étapes d'absorption avec des hydrocarbures liquides absorbants bien spécifiques. La Demanderesse a trouvé qu'un système de purification par absorption du courant gazeux contenant de l'hydrogène permet une meilleure purification du courant gazeux contenant de l'hydrogène que des séparations du type contact-éclair utilisées antérieurement. L'affinité élevée des liquides absorbants utilisés ici pour les hydrocarbures à bas poids moléculaire qui contaminent le courant gazeux, résulte en un enlèvement plus complet des hydrocarbures gazeux, et permet simultanément l'obtention d'un courant d'hydrogène de pureté plus élevée. Les deux réactions d'absorption décrites dans la présente invention peuvent être réalisées dans le même récipient ou dans des récipients différents. Dans la figure qui accompagne cette description, on montre l'utilisation d'un seul récipient pour réaliser les deux réactions d'absorption. Cependant, il doit être bien compris que l'utilisation de récipients séparés pour réaliser les deux réactions d'absorption est une modification qui ne sort pas du cadre de la présente invention.

Selon le mode d'exécution représenté à la figure, le courant gazeux comprimé et refroidi, contenant de l'hydrogène, est introduit via la conduite (35) au pied de la colonne d'absorption (37). Un premier solvant ou liquide absorbant, comprenant le courant d'hydrocarbures liquides obtenus dans le séparateur (25), est dirigé via la conduite (26) et la pompe (27), qui effectue un accroissement de pression, et via les conduites (28) et (36), vers la partie intermédiaire de la colonne d'absorption (37). Le second liquide absorbant, décrit plus en détail ci-après, est introduit via la conduite (54) à la partie supérieure de la colonne d'absorption (37). Dans la colonne d'absorption (37), les produits ascendants en phase vapeur sont mis en contact intime, à contre-courant, avec le courant descendant du premier liquide absorbant. Par conséquent, dans la colonne d'absorption (37), le courant gazeux d'hydrogène relativement impur contenant des quantités significatives d'hydrocarbures à bas poids moléculaire, passe vers le haut à travers plusieurs étages de contact et est lavé par le courant descendant d'hydrocarbures relativement lourds qui comprend le premier et le second liquides absorbants, qui ont été préliminairement introduits via les conduites (36) et (54). Cette opération d'absorption permet de purifier l'hydrogène de manière telle que l'on soutire de la colonne d'absorption (37) par la conduite (58) un courant d'hydrogène relativement pur. On recycle une partie de cet hydrogène relativement pur à la zone de réaction de réformage par la conduite (2), tandis que l'on soutire le reste par la conduite (59) pour l'utiliser dans d'autres réactions consommatrices d'hydrogène.

La colonne d'absorption (37) comprend de préférence un récipient allongé, disposé verticalement. Cependant, d'autres types connus de colonne d'absorption peuvent également être utilisés. De préférence, la colonne d'absorption (37) contient également un matériau d'empillage approprié ayant la forme de scelle, ou de spirale, ou des plateaux qui assurent un contact intime entre le courant gazeux ascendant et le liquide absorbant descendant. Les positions des divers courant d'entrée et de sortie de la colonne d'absorption (37) sont telles que la phase vapeur est enlevée à la partie la plus haute de la colonne. A la partie inférieure de la colonne, on trouve l'entrée du courant gazeux contenant de l'hydrogène. Les entrées des deux liquides absorbants sont placées au-dessus de l'entrée du courant gazeux et en dessous de la sortie de ce même courant. La colonne d'absorption fonctionne généralement à une température comprise entre environ 30 et environ 65 °C. Bien que l'on puisse avantageusement utiliser des températures moins élevées, celles-ci entraînent des coûts opératoires plus conséquents.

Par la conduite (38) située au pied de la colonne d'absorption (37), on soutire un courant d'hydrocarbures liquides riche en hydrocarbures gazeux, ce courant comprenant les hydrocarbures normalement gazeux qui y ont été absorbés, le premier courant d'hydrocarbures liquides et le second liquide absorbant. Ce courant liquide est envoyé à la colonne de stabilisation (39) par la conduite (38). La colonne de stabilisation (39) comprend une colonne de fractionnement maintenue sous des conditions pour permettre l'enlèvement d'une fraction d'hydrocarbures gazeux $C_1$-$C_4$ du courant riche en hydrocarbures liquides, et par la suite de produire un courant d'hydrocarbures $C_5+$ normalement liquides. Selon un mode d'exécution d'une opération de réformage catalytique, la colonne de stabilisation (39) est appelée habituellement débutaniseur ou dépentaniseur, et les conditions de température en tête et en pied de colonne sont généralement environ de 80 à 95 °C et environ de 230 à 260 °C, en fonction d'une pression en tête de colonne d'environ de 7 à 21 kg/cm$^2$ absolu.

Le courant d'hydrocarbures $C_5+$ normalement liquides, qui s'intitule généralement le réformat stabilisé, est soutiré par la conduite (50) et passe dans la pompe (51) dans laquelle on accroît la pression d'écoulement. On soutire une partie du réformat stabilisé dans la conduite (54) pour être utilisé dans la colonne d'absorption (37) comme second liquide absorbant, comme décrit dans la présente invention. Le second liquide absorbant comprend donc une partie stabilisée des hydrocarbures liquides obtenus finalement dans le procédé de réformage catalytique. Une partie du réformat stabilisé qui passe par la conduite (54) est également soutirée par la conduite (55) et recyclée via un dispositif de chauffage (56) et la conduite (57) au pied de la colonne de stabilisation (39) de façon à y amener de la chaleur. Le reste du réformat stabilisé est enlevé par la conduite (53) pour devenir le courant d'hydrocarbures liquides obtenus finalement dans le procédé de réformage.

Selon un mode d'exécution préféré, le courant d'hydrocarbures gazeux produit à la colonne de stabilisation (39), est condensé et ensuite séparé pour donner un courant gazeux comprenant le méthane et l'éthane, et un courant d'hydrocarbures liquides en $C_3$ et en $C_4$. Le courant d'hydrocarbures gazeux est enlevé en tête de la colonne de stabilisation (39) par la conduite (40) et est envoyé au dispositif de condensation (41) pour effectuer la condensation des hydrocarbures en $C_3$ et en $C_4$. Le mélange biphasique résultant est enlevé par la conduite (42) et est envoyé au séparateur gaz-liquide (43) dans lequel on enlève un courant de gaz via la conduite (44), qui comprend principalement du méthane et de l'éthane ainsi que de l'hydrogène résiduel et quelques composés à poids moléculaire plus élevé. Ce courant est approprié pour être utilisé comme carburant dans d'autres parties de l'opération de raffinage, mais est souvent utilisé pour récupérer les $C_3$ et autres composés à points d'ébullition plus élevés. Un courant liquide comprenant les $C_3$, $C_4$ et autres hydrocarbures à points d'ébullition plus élevés est enlevé du séparateur (43) par la conduite (45) et est envoyé à la pompe (46) dans laquelle on accroît la pression d'écoulement. Une partie de ce courant liquide est enlevée via la conduite (48) et est utilisée comme reflux à la partie supérieure de la colonne de stabilisation (39). La partie de liquide restant est soutirée par la conduite (49) et représente un courant de produits consistant principalement en $C_3$, $C_4$ et autres hydrocarbures à points d'ébullition plus élevés, que l'on appelle gaz de pétrole liquide (LPG).

De plus, selon un mode d'exécution préféré de la présente invention, on peut également mélanger une partie du produit liquide obtenu au séparateur (25) avec le courant gazeux contenant de l'hydrogène impur passant dans la conduite (31), avant de refroidir le courant gazeux contenant de l'hydrogène dans l'échangeur (34), et de le faire passer dans la colonne d'absorption (37). Selon ce mode d'exécution, on soutire par la conduite (32) une partie des hydrocarbures liquides passant par la conduite (28), et on mélange cette partie avec le courant gazeux passant dans la conduite (31). On refroidit ensuite le mélange combiné dans le refroidisseur (34) et on l'introduit au pied de la colonne d'absorption (37) via la conduite (35). Le reste des hydrocarbures liquides provenant du séparateur (25) est ensuite envoyé par la conduite (36) à l'entrée prévue à la colonne d'absorption (37) dans laquelle il est mis en contact, à contre-courant, avec le courant gazeux ascendant. En mélangeant une partie des hydrocarbures liquides provenant du séparateur (25) avec le courant gazeux contenant de l'hydrogène, la pureté de l'hydrogène produit peut même être améliorée. Ce contact supplémentaire entre le courant gazeux et un solvant hydrocarboné est une occasion supplémentaire pour enlever les hydrocarbures normalement gazeux du courant gazeux, puisqu'une partie de la chaleur d'absorption est enlevée avant l'entrée du mélange à la colonne d'absorption (37).

On ne sort cependant pas du cadre de l'invention si l'on omet ce contact supplémentaire.

Selon la présente invention, l'hydrogène produit au cours de l'hydrotraitement de charges d'hydrocarbures peut être obtenu avec une pureté non encore atteinte, et par une méthode simple et économique. En permettant l'utilisation d'hydrogène de pureté plus élevée pour le recyclage et d'autres utilisations, la méthode d'hydrotraitement de la présente invention permet un accroissement considérable de l'économie tant au point de vue capital à investir que du point de vue des coûts opératoires par rapport aux procédés conventionnels. En soumettant l'hydrogène fabriqué à une absorption avec un premier courant d'hydrocarbures liquides et avec une partie du réformat stabilisé, on peut obtenir de l'hydrogène ayant une pureté améliorée. En conséquence, on doit comprimer un plus faible volume de gaz de recyclage pour maintenir la pression partielle désirée, ce qui permet de réduire l'investissement en capital et les coûts opératoires. La présente invention apporte donc une méthode particulièrement efficace pour hydrotraiter les charges d'hydrocarbures, et particulièrement pour traiter le courant effluent et produire ainsi de l'hydrogène de pureté élevée.

Bien que la présente invention ait été décrite sous forme de modes d'exécution préférés, il est évident que des modifications et des améliorations peuvent être apportées sans sortir du cadre de l'invention.

## Revendication

Méthode de récupération d'hydrogène gazeux de pureté accrue à partir d'un courant effluent qui provient d'une zone d'hydrotraitement et qui contient de l'hydrogène gazeux ainsi que des hydrocarbures transformés, en soumettant ce courant effluent à une séparation gaz-liquide à basse pression avec obtention, d'une part, d'un courant gazeux contenant de l'hydrogène et, d'autre part, d'un courant liquide d'hydrocarbures, cette méthode étant caractérisée en ce que :

— on comprime ce courant gazeux contenant de l'hydrogène, on le mélange à une première partie du courant liquide d'hydrocarbures et on refroidit le mélange résultant,

— on soumet le mélange refroidi à une première absorption en contre-courant d'un premier liquide absorbant qui consiste en une deuxième partie du courant liquide d'hydrocarbures obtenu lors de la séparation à basse pression,

— on soumet les gaz sortant de cette première absorption à une deuxième absorption en contre-courant d'un deuxième liquide absorbant qui consiste en un liquide hydrocarboné, stabilisé, d'où obtention d'hydrogène de pureté accrue,

— on récupère les deux liquides absorbants et on soumet leur mélange à un traitement de stabilisation pour enlever les hydrocarbures légers et produire un liquide hydrocarboné, stabilisé, utilisé comme deuxième liquide absorbant, et

— on recycle au moins une partie de l'hydrogène de pureté accrue vers la zone d'hydrotraitement.

## Claim

Method for recovering hydrogen gas of increased purity from a hydrotreatment process effluent stream, containing hydrogen gas in admixture with converted hydrocarbons, by subjecting said effluent stream to a gas-liquid separation at low pressure to produce, on one hand, a gaseous hydrogen-containing stream and, on the other hand, a liquid phase hydrocarbon stream, said method being characterized by :

— compressing the gaseous hydrogen-containing stream, admixing it with a first portion of the liquid phase hydrocarbon stream and cooling the resulting admixture,

— subjecting the cooled admixture to a first countercurrent absorption step with a first absorber liquid comprising a second portion of the liquid hydrocarbon stream from the separation at low pressure,

— subjecting the gas exiting from said first absorption step to a second countercurrent absorption step with a second absorber liquid which comprises a liquid stream of stabilized hydrocarbons, with production of hydrogen gas of increased purity,

— recovering both absorber liquids and subjecting their combined stream to stabilization to remove light hydrocarbons and to produce a liquid stream of stabilized hydrocarbons which is used as second absorber liquid, and

— recycling at least a portion of the hydrogen gas of increased purity to the hydrotreatment zone.

**Anspruch**

Verfahren zur Wiedergewinnung von Wasserstoffgas mit größerer Reinheit aus einem Abgasstrom von einem Hydro-Behandlungsverfahren, wobei der Abgasstrom Wasserstoffgas in Mischung mit umgesetzten Kohlenwasserstoffen enthält, indem dieser Strom bei geringem Druck einer Gas/Flüssigkeitstrennung unterzogen wird, um einerseits einen gasförmigen, wasserstoffhaltigen Strom und andererseits einen Kohlenwasserstromstrom in Flüssigphase zu erzeugen, dadurch gekennzeichnet, daß :

— der gasförmige, wasserstoffhaltige Strom komprimiert, mit einem ersten Teil des Kohlenwasserstoffstroms in Flüssigphase vermischt und die entstandene Mischung gekühlt wird,

— die gekühlte Mischung einer ersten Gegenstromabsorptiosstufe mit einer ersten Absorptionsflüssigkeit unterworfen wird, die einen zweiten Teil des aus der Trennung bei geringem Druck stammenden flüssigen Kohlenwasserstoffstrom umfaßt,

— das aus der ersten Absorptionsstufe austretende Gas einer zweiten Gegenstrom-Absorptionsstufe mit einer zweiten Absorptionsflüssigkeit unterworfen wird, welche einen flüssigen Strom stabilisierter Kohlenwasserstoffe umfaßt, wobei ein Wasserstoffgas von erhöhter Reinheit erzeugt wird,

— beide Absorptionsflüssigkeiten wiedergewonnen werden und deren kombinierter Strom einer Stabilisierung unterworfen wird, um die leichten Kohlenwasserstoffe zu entfernen und einen flüssigen Strom stabilisierter Kohlenwasserstoffe zu erzeugen, der als zweite Absorptionsflüssigkeit benutzt wird, und

— wenigstens ein Teil des Wasserstoffgases von erhöhter Reinheit in die Hydrobehandlungszone zurückgeführt wird.